# EUROPEAN PATENT APPLICATION

(11) **EP 2 746 947 A2**
(43) Date of publication of application: **25.06.2014**
(21) Application number: 13179547.8
(22) Date of filing: 07.08.2013
(51) Int. Cl.: G06F 9/50, H04L 12/24

(54) **Information processing system, identification information decision device and identification information decision method**

(30) Priority: 31.08.2012 JP 2012192594
(71) Applicant: FUJITSU LIMITED, Kawasaki-shi, Kanagawa 211-8588 (JP)
(72) Inventor: Takeuchi, Tsuyoshi, Kanagawa, 211-8588 (JP)
(74) Representative: HOFFMANN EITLE

(57) **Abstract**

An information processing system has a plurality of information processing units (1). The information processing system includes: an information collector (20) configured to collect device identification information assigned to each of the information processing units; a storage (32) configured to store history information indicating whether each piece of the device identification information collected by the information collector has been used as system identification information of the information processing system; and a decision unit (20) configured to determine the system identification information from the device identification information collected by the information collector, according to the history information stored in the storage and the device identification information collected by the information collector.

## Description

### FIELD

The embodiments discussed herein are related to an information processing system, an identification information decision device, and an identification information decision method.

### BACKGROUND

In recent years, networks have become widespread, and servers, i.e., information processing units (computers) connected to these networks, are widely used to provide services. Such servers are required to enable many people to use the services through the network in a timely manner. For this reason, high performance and high reliability are required for servers.

It has become common practice to connect a plurality of servers to the network so as to realize even higher performance and even higher reliability, and to use the plurality of servers as if they were a single server. In the following description, a system configured by connecting a plurality of servers (information processing units) to each other for the realization of certain purposes may be referred to as an information processing system.

Identification information that is used to distinguish itself from other information processing systems (hereinafter, referred to as "system identification information") is assigned to an information processing system. The license of an application program (hereinafter, referred to as "application" for short) to be executed by a server is usually managed by using the system identification information. This is because the management of servers is easier if all the servers that belong to the same information processing system are managed by one piece of information.

The assignment of system identification information for the information processing system is performed, for example, by a system administrator. Moreover, the identification information of devices included in the information processing system is managed by using a management operation terminal. A related art is disclosed, for example, in Japanese Laid-open Patent Publication No. 2007-172049.

The configuration of the information processing system may vary due to a failure in the server included in the information processing system. A server may be added to the information processing system in order to reduce the load on each server. When the configuration of the information processing system varies as above, the system identification information is renewed. In this case, it is desired that the renewal of the identification information be performed automatically so as to reduce the load on a system administrator.

Identification information that is used to distinguish a server from the other servers (hereinafter, referred to as "device identification information") is assigned to each server that belongs to the information processing system. In this case, one of the servers that belong to the information processing system is selected, and the device identification information of the selected server may be adopted as the system identification information.

However, if a method is used where the device identification information of a selected server is adopted as the system identification information, it may become necessary to change the system identification information when the selected server does not function due to a failure or the like. Such renewal of the system identification information is not desirable in view of the license of an application or the like. Moreover, a method where a system administrator determines the system identification information is burdensome for the system administrator. For the reasons discussed above, it is desired that appropriate system identification information be automatically determined when the configuration of an information processing system changes.

### SUMMARY

It is an object in one aspect of the present invention to provide a technique in which the identification information of an information processing system is appropriately determined when the configuration of the information processing system is changed.

According to an aspect of the embodiments, an information processing system has a plurality of information processing units. The information processing system includes: an information collector configured to collect device identification information assigned to each of the information processing units; a storage configured to store history information indicating whether each piece of the device identification information collected by the information collector has been used as system identification information of the information processing system; and a decision unit configured to determine the system identification information from the device identification information collected by the information collector, according to the history information stored in the storage and the device identification information collected by the information collector

### BRIEF DESCRIPTION OF DRAWINGS

FIG. 1 illustrates an example of the configuration of an information processing system according to the embodiment.
FIG. 2 illustrates the data collected by a master for the determination of a system serial number.
FIG. 3 illustrates the data transmitted from a master to slaves according to the determination of a system serial number.
FIGs. 4-7 illustrate embodiments of the determination of a system serial number.
FIGs. 8A and 8B are flowcharts illustrating the processes of registering a system serial number.
FIG. 9 is a flowchart illustrating the processes of detaching a slave server from an information processing system.

### DESCRIPTION OF EMBODIMENTS

Some embodiments of the present invention will be described below in detail with reference to the drawings.

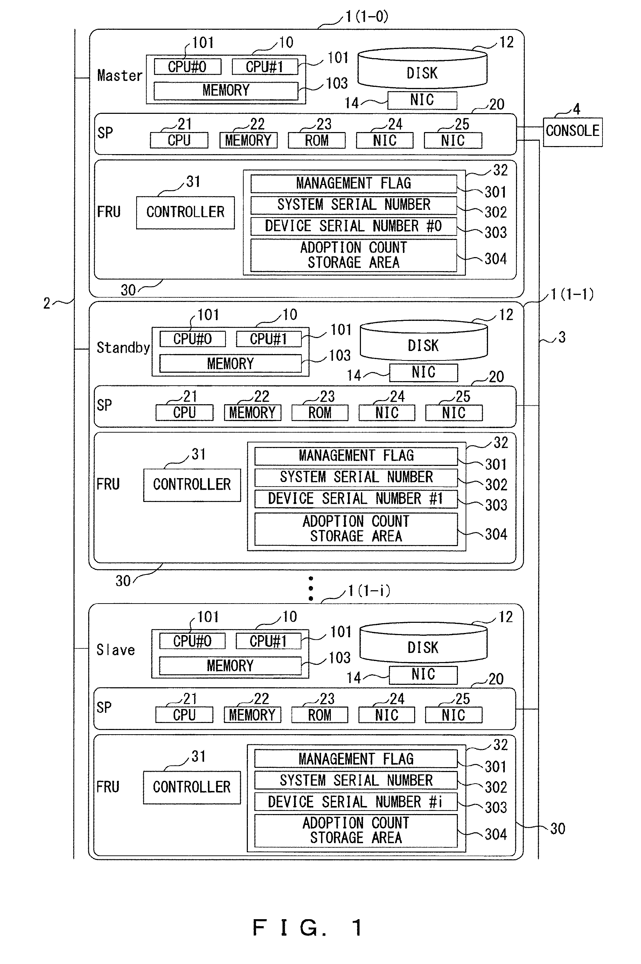

FIG. 1 illustrates an example of the configuration of an information processing system according to the embodiment. As illustrated in FIG. 1, the information processing system according to the embodiment includes a plurality of servers 1 (1-0 to 1-i). Each of the servers 1 is an example of the information processing unit. The servers 1 are connected to each other through a network 2 and a network 3.

Each of the servers 1 includes, for example, one or more system boards 10, a disk drive 12, one or more NICs (Network Interface Cards) 14, an SP (Service Processor) 20, and one or more FRUs (Field Replaceable Units) 30.

The system board 10 includes a plurality of CPUs (Central Processing Units) 101 and a memory 103, and operates like one information processing unit. The disk drive 12 is, for example, a hard disk drive. The disk drive 12 is configured to be accessed by the system board 10. The NIC 14 is, for example, a communication device for transmitting and receiving data through the network 2. The system board 10, the disk drive 12, and the NIC 14 are connected to a bus (not illustrated).

The SP 20 is a management device for managing the server 1 in which the SP 20 is installed, and is an information processing unit (computer) including, for example, a CPU 21, a memory 22, a ROM (Read Only Memory) 23, and NICs 24 and 25. These elements are connected to a bus (not illustrated). The NIC 24 is used, for example, for the communication through the network 3. The NIC 25 is used for the connection with a console 4. Firmware that is executed by the CPU for the purpose of management is stored in the ROM 23. The CPU 21 executes the firmware to manage the operations of the server 1. The startup/termination or the like of the system board 10 is instructed by the CPU 21.

The FRU 30 is a component to be maintained which may be replaced by a system administrator, and the FRU 30 includes a controller 31 and a memory 32. The memory 32 is a nonvolatile memory such as a flash memory. The memory 32 stores various kinds of data including a management flag 301, a system serial number 302, and a device serial number 303. The memory 32 has an adoption count storage area 304.

The system serial number 302 is the system identification information determined by an information processing system. The device serial number 303 is the device identification information assigned to each of the servers 1. In FIG. 1, device serial numbers #0, #1, and #i indicate the device serial numbers that are assigned to the servers 1-0, 1-1, and 1-i, respectively.

The system serial number 302 stored in the memory 32 is the data that indicates the determined system serial number, which is different from a system serial number to be determined. In order to clarify the difference between the system serial number 302 and a system serial number to be determined, the reference sign "302" will only be assigned to the system serial number that is stored in the memory 32 as data and to the system serial number that is read from the memory 32 as data.

A count value that indicates the number of times the device serial number 303 of the server 1 has been adopted as the system serial number 302 is stored in the adoption count storage area 304. Hereinafter, this count value will be referred to as an "adoption count". The initial value of an adoption count is "0". An adoption count is incremented every time the device serial number 303 is adopted as the system serial number 302. Note that the adoption count may also be used as the information that indicates whether or not the device serial number 303 of server 1 has been adopted as the system serial number 302.

The management flag 301 specifies the role assigned to the server 1. The role will be one of "Master", "Standby", and "Slave". The management flag 301 and the device serial number 303 may be updated from the console 4, while the console 4 is connected to the SP 20 of the server 1.

In the present embodiment, one of the single servers 1 that belong to an information processing system determines the system serial number 302. The server 1 that determines the system serial number 302 will be referred to as a master server. In this case, the master server is an example of the identification information decision device according to the embodiment. The servers 1 other than the master server function as a standby server or a slave server. Note that a standby server or a slave server does not determine the system serial number 302. The system board 10 of a slave server is operating at all times. On the other hand, the system board 10 of a standby server starts operating when instructed to do so. Note that in the following description, a slave server may include a standby server unless otherwise specified.

In the present embodiment, the SP 20 performs the processes related to the determination of a system serial number. The data 301-303 and the adoption count stored in the memory 32 of the FRU 30 is used for the determination of a system serial number. Such data 301-303 and the adoption count are stored in the memory 32 of the FRU 30 because the SP 20 may be replaced. In other words, since the data 301-303 and the adoption count are stored in the memory 32 of the FRU 30, the system serial number 302 will not change due to the replacement of the SP 20 or the like.

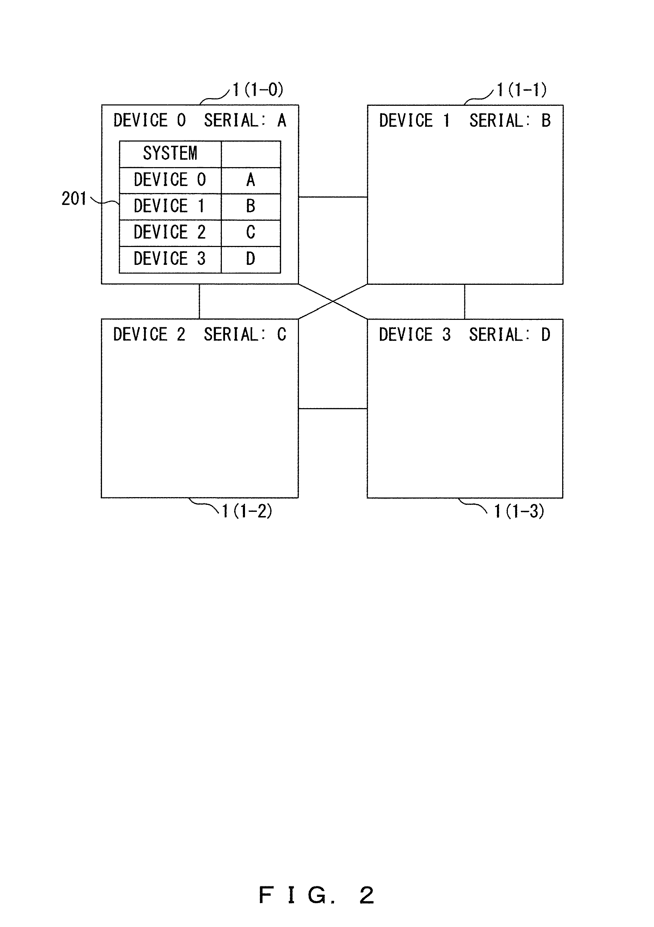

The system serial number is determined by the SP 20 of the master server as follows. A detailed description is given below with reference to FIGs. 2-7.

FIG. 2 illustrates the data collected by a master server for the determination of a system serial number. In FIG. 2, the server 1-0 functions as the master server, and the servers 1-1 to 1-3 function as slave servers. The master server collects the device serial numbers 303 from slave servers. In the example of FIG. 2, the server 1-0 obtains "device serial number =B", "device serial number =C", and "device serial number =D" from the server 1-1, the server 1-2, and the server 1-3, respectively.

In FIG. 2, "DEVICE 0 SERIAL: A" indicates that the device serial number 303 of the server 1-0 is "A". "DEVICE 1 SERIAL: B" indicates that the device serial number 303 of the server 1-1 is "B". This notation is applicable to the other servers.

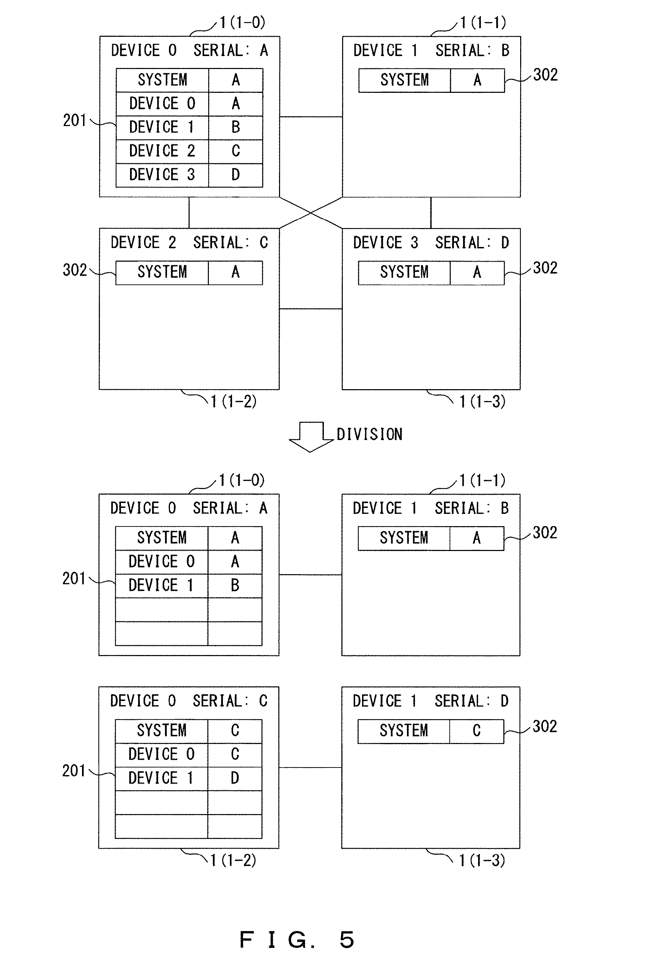

In FIG. 2, as described above, numerals "0"-"3" for distinguishing the servers 1 are described after "DEVICE" in addition to the information of the device serial numbers 303. Such notation is used so as to represent the relationship between each of the servers and the device serial number 303 collected from that server, and to clearly indicate the server that has become the master server from among the servers. The server 1 that is assumed to be the master server is indicated with "DEVICE 0". Accordingly, only one server in each information system is indicated with "DEVICE 0" in FIGs. 5-7, where a plurality of information processing systems are illustrated.

The SP 20 of each of the servers 1-0 to 1-3 instructs the controller 31 of the FRU 30 to obtain the device serial number 303 and the adoption count stored in the memory 32. Next, the SP 20 instructs the controller 31 of the FRU 30 to obtain the management flag 301 that is stored in the memory 32. By so doing, the SP 20 of each of the servers 1-0 to 1-3 recognizes the roles of the server 1. From then on, the SP 20 of each of the servers 1-0 to 1-3 operates according to the result of the recognition.

The SP 20 of the server 1-0 recognizes the server 1-0 as the master server by referring to the management flag 301. In that case, the SP 20 secures a working area 201 in the memory 22, and the device serial number 303 and the adoption count obtained from the memory 32 of the server 1-0 are stored in the working area 201. Next, the SP 20 collects the device serial numbers 303 and adoption counts from the SPs 20 of the slave servers 1-1 to 1-3, and stores the collected device serial numbers 303 and adoption counts in the working area 201. Note that in the example illustrated in FIG. 2, the server 1-0 collects the device serial numbers 303 as well as adoption counts from the SPs 20 of the servers 1-1 to 1-3.

"SYSTEM" in the working area 201 indicates the system serial number. However, the system serial number is not recorded in FIG. 2. "DEVICE 0" to "DEVICE 3" in working area 201 indicate the corresponding servers 1, respectively. In particular, "DEVICE 0" to "DEVICE 3" indicate the servers 1-0 to 1-3, respectively. "A" to "D" in the working area 201 indicate the device serial numbers 303 of the servers 1-0 to 1-3, respectively. Note that the working area 201 of FIG. 2 indicates the state after the master server 1-0 has collected data from the slave servers 1-1 to 1-3.

After the data collection is completed, the SP 20 of the server 1-0 instructs the controller 31 of the FRU 30 to obtain the system serial number 302 that is stored in the memory 32. Next, the SP 20 compares the obtained system serial number 302 with the device serial number 303 stored in the working area 201 to determine whether there is a device serial number 303 that matches the obtained system serial number 302. When there is a device serial number 303 that matches the obtained system serial number 302, the SP 20 adopts the matched device serial number 303 as the system serial number.

As described above, if a server 1 with the device serial number 303 that was adopted as an immediately previous system serial number (i.e., the server 1-0 in this case) still exists, it is determined that the same system serial number will be used. For this reason, when the server that serves as the master server is not changed and the server 1 with the device serial number 303 that was adopted as the system serial number exists, the system serial number remains the same. In other words, the system serial number that was determined in the immediately previous decision will be adopted as a new system serial number with a top priority.

When there is no device serial number 303 that matches the system serial number 302, the SP 20 decides to use a system serial number that differs from the previous system serial number. In that case, the SP 20 refers to the working area 201 to extract a device serial number 303 whose adoption count is not zero, and specifies the device serial number 303 that is to be adopted as the system serial number from among the extracted device serial numbers 303. When no device serial number 303 was successfully extracted, the SP 20 selects one of the device serial numbers 303 in accordance with a specified rule, and adopts the selected device serial number 303 as the system serial number.

When one device serial number 303 is selected as the system serial number from among the device serial numbers whose adoption count is not zero, a system serial number that was determined for use in the past is determined to be a new system serial number on a priority basis. By so determining the system serial number, the system serial number is prevented from being frequently changed. In the embodiment, for example, the device serial number 303 with the greatest adoption count is adopted as the system serial number. In this case, the system serial number is further prevented from being changed.

The configuration of an information processing system may be temporary changed. In consideration of the above, in addition to the adoption count, the date and time when each device serial number was adopted as the system serial number for the last time may be stored as history information. In this case, it may be configured such that the last-adopted device serial number will be adopted as the system serial number from among the device serial numbers 303 that were previously adopted as the system serial number.

As described above, the management flag 301 may be changed according to the information input from a terminal (console 4). Hence, the master server 1 may adopt its own device serial number 303 as the system serial number on a priority basis according to the instructions given from the console 4.

When there is no device serial numbers 303 whose adoption count is one or larger, the device serial number 303 with the smallest value may be adopted as the system serial number from among the device serial numbers 303. Here, it is assumed that "A<B<C<D" in FIG. 2. In this case, the device serial number of the server 1-0 is adopted as the system serial number.

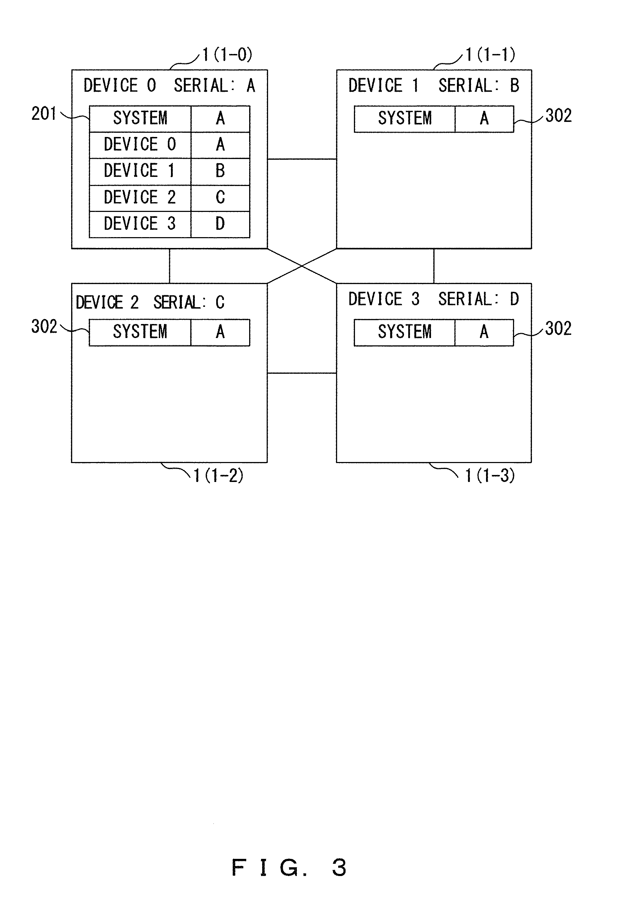

The SP 20 of the master server 1-0 determines the system serial number as described above. The determined system serial number is stored in the memory 32 of the FRU 30 as the system serial number 302, and as illustrated in FIG. 3, the SPs 20 of the slave servers 1-1 to 1-3 are notified of the determined system serial number. Accordingly, the SP 20 of each of the servers 1-1 to 1-3 stores the given system serial number in the memory 32 of the corresponding FRU 30 as the system serial number 302. For this reason, even if there is a change in the servers 1 other than the server 1-0, the device serial number of the server 1-0 will be continuously adopted as the system serial number in the information processing system to which the server 1-0 belongs.

In this example, the device serial number of the server 1-0 is smaller than the device serial numbers of the other servers 1-1 to 1-3. In this case, when none of the device serial numbers 303 of the servers 1-0 to 1-3 are adopted as the system serial number, the device serial number 303 of the server 1-0 is adopted as the system serial number. Also, when the adoption count stored in the server 1-0 is the greatest, the device serial number 303 of the server 1-0 is adopted as the system serial number.

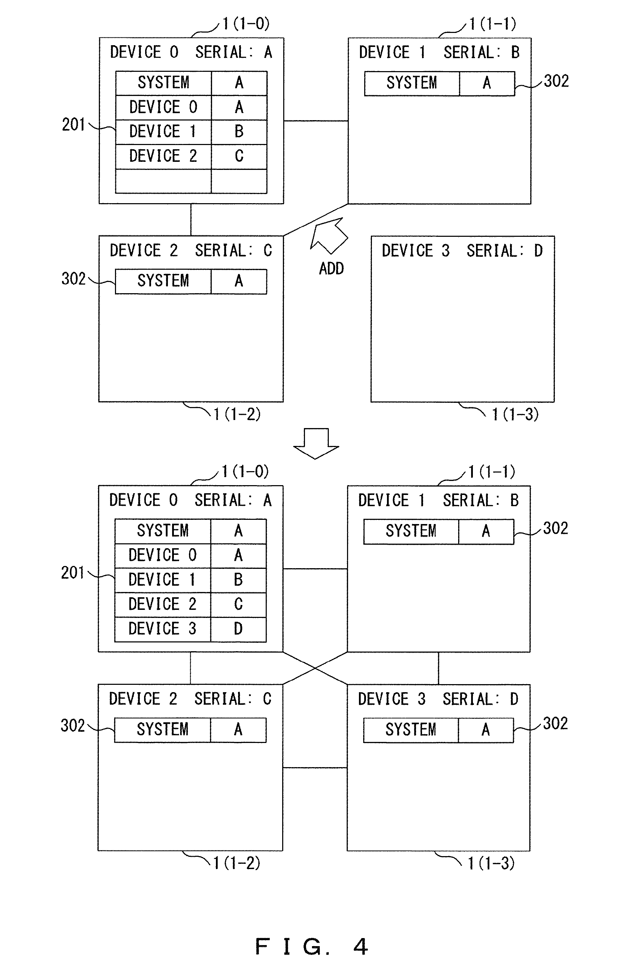

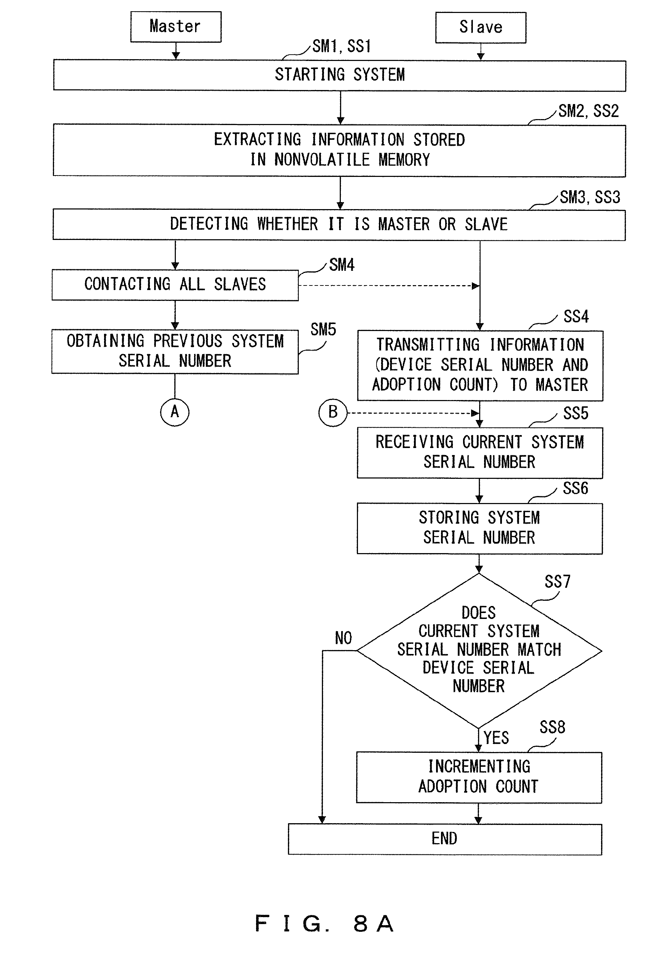

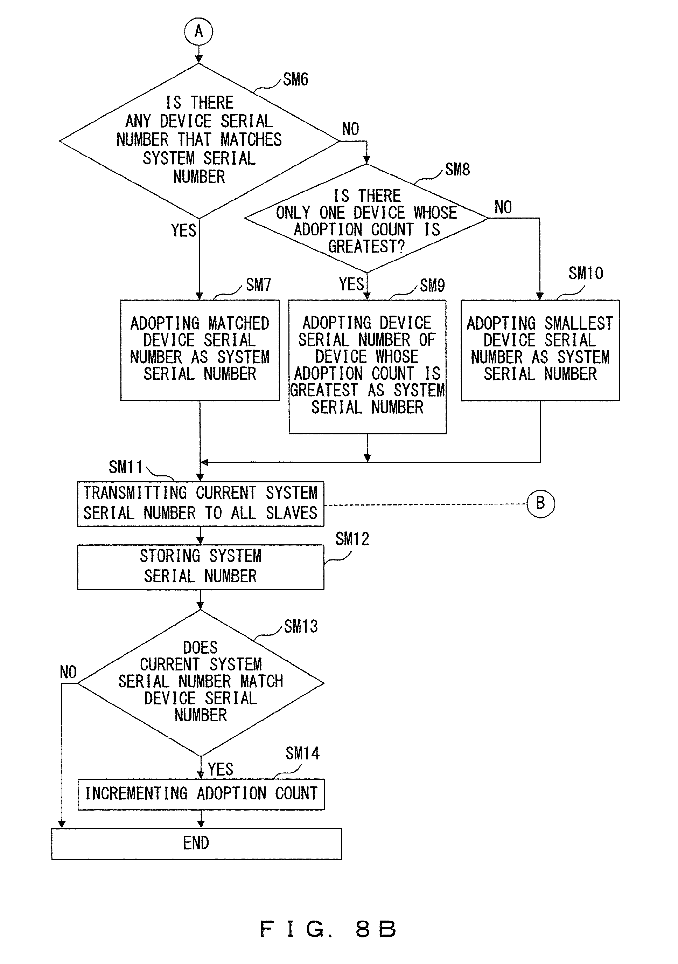

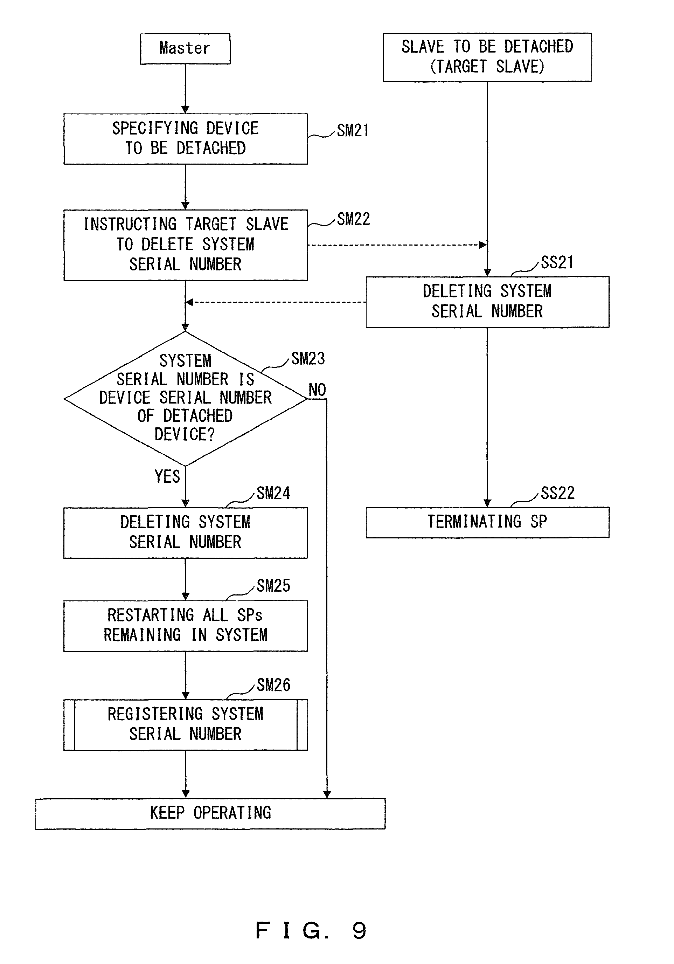

The data collection and the determination of a system serial number illustrated in FIG. 2, and the notification of the system serial number illustrated in FIG. 3 are realized by the CPUs 21 of the SPs 20 provided for a master server and slave servers, which execute the firmware stored in the ROM 23. Before FIG. 4 is explained, the processes that are realized by the above firmware will be described with reference to FIGs. 8A, 8B, and 9.

FIGs. 8A and 8B are flowcharts illustrating the processes of registering a system serial number. The processes illustrated in FIGs. 8A and 8B are realized by the CPUs 21 provided for the SPs 20 of the servers 1, each of which executes the firmware that is stored in the ROM 23. Next, the operation of the SPs 20 of a master server and slave servers will be described. Here, the master server and the slave server may be referred to as a master server 1M and a slave server 1S, respectively, for the sake of convenience.

In the processes illustrated in FIGs. 8A and 8B, it is assumed that all the servers 1 connected to the network 3 are included in an information processing system. The servers 1 included in an information processing system may be combined such that the SPs 20 of the respective servers 1 will be identified by using the configuration information in which the combination is expressed.

The processes of registering a system serial number are performed, for example, when the SP 20 is started. This is because it is often the case that the power source is turned off when the configuration of an information processing system is changed. In FIGs. 8A and 8B, the process performed in common by the master server 1M and the slave server 1S is represented as one step.

The CPU 21 provided for the SP 20 of each of the servers (i.e., the master server 1M and the slave servers 1S) reads firmware from the ROMs 23 and executes the firmware to start the system (SM1, SS1) when, for example, the power source is turned on. Next, the CPU 21 of the SPs 20 obtains the device serial number 303 and the adoption count by instructing the controller 31 of the FRU 30 to extract the device serial number 303 and the adoption count stored in the memory 32 (SM2, SS2). Further, the CPU 21 of the SP 20 identify the roles of the server by obtaining the management flags 301 by instructing the controller 31 of the FRU 30 to extract the management flag 301 stored in the memory 32 (SM3, SS3). In other words, each of the servers 1 detects or recognizes whether the server itself is a master server or a slave server.

In the master server 1M, the CPU 21 of the SP 20 secures the working area 201 in the memory 22, and performs the processes related to the determination of a system serial number. In the slave server 1S, the CPU 21 of the SP 20 performs processes according to the instructions given from the CPU 21 of the SP 20 provided for the master server 1M.

In the master server 1M, the CPU 21 of the SP 20 contacts the SPs 20 of the slave servers 1S to inquire about the device serial number 303 and adoption count (SM4). The inquiry is made by using the NIC 24 through the network 3.

In each of the slave servers 1S, the CPU 21 of the SP 20 transmits the device serial numbers 303 and adoption count of the server to the master server 1M in response to the above inquiry (SS4).

In the master server 1M, the CPU 21 of the SP 20 stores the device serial number 303 and the adoption count of the master server 1M in the working area 201. In addition, the CPU 21 stores the device serial numbers 303 and adoption counts received from the slave servers 1S in the working area 201. Then the CPU 21 instructs the controller 31 of the FRU 30 to obtain the system serial number 302 that is stored in the memory 32 (SM5).

In the master server 1M, the CPU 21 of the SP 20 refers to the working area 201 to determine whether or not there is a device serial number 303 that matches the obtained system serial number 302 (SM6). When there is a device serial number 303 that matches the obtained system serial number 302, the decision in SM6 is "YES". In this case, the CPU 21 adopts the device serial number 303 as the system serial number (SM7). When there is no device serial number 303 that matches the obtained system serial number 302, the decision in SM6 is "NO", and then SM8 is performed.

In SM8, the CPU 21 refers to the working area 201 to determine whether there is only one server 1 in which the adoption count is the greatest. When there is only one server 1 in which the adoption count is the greatest, the CPU 21 adopts the device serial number 303 of the server 1 whose adoption count is the greatest as the system serial number (SM9). When there are a plurality of servers 1 in which the adoption count is the greatest or when the adoption counts are all zero, SM10 is performed.

In SM10, the CPU 21 refers to the working area 201 to identify the smallest device serial number 303, and adopts the identified device serial number 303 as the system serial number. In other words, when there are a plurality of servers 1 in which the adoption count is the greatest, the smallest device serial number 303 is adopted as the system serial number from among the device serial numbers 303 of the plurality of servers 1. Alternatively, when all the adoption counts are zero, the smallest device serial number is adopted as the system serial number from among all the servers 1.

In SM11, the CPU 21 stores the determined system serial number in the working area 201, and transmits the determined system serial number to the SP 20 of each of the slave servers 1S.

In each of the slave servers 1S, the CPU 21 of the SP 20 receives the system serial number from the master server 1M (SS5), and stores the received system serial number in the memory 32 of the FRU 30 as the system serial number 302 (SS6).

In each of the slave servers 1S, after the system serial number 302 is stored in the memory 32, the CPU 21 determines whether or not the system serial number 302 matches the device serial number 303 (SS7) of the server itself. When the system serial number 302 matches the device serial number 303 of the server itself, i.e., when the device serial number 303 of the server itself is adopted as the system serial number, the CPU 21 increments the adoption count in the adoption count storage area 304 that is secured in the memory 32 of the FRU 30 (SS8). On the other hand, when the system serial number 302 stored in the memory 32 does not match the device serial number 303 of the server itself, SS8 is skipped.

In the master server 1M, after the CPU 21 of the SP 20 transmits the determined system serial number to the slave servers 1S, the CPU 21 stores the determined system serial number in the memory 32 of the FRU 30 as the system serial number 302 (SM12).

Next, the CPU 21 determines whether the system serial number 302 stored in the memory 32 matches the device serial number 303 of the master server itself (SM13). When they match, i.e., when the device serial number 303 of the master server 1M is adopted as the system serial number, the CPU 21 increments the adoption count in the adoption count storage area 304 that is secured in the memory 32 of the FRU 30 (SM14). On the other hand, when the system serial number 302 does not match the device serial number 303 of the master server 1M, SM14 is skipped.

The processes of registering a system serial number are performed as described above by the SP 20 of the master server 1M and by the SPs 20 of the slave servers 1S. As a result, the operation described above with reference to FIGs. 2 and 3, and the determination of a system serial number, as will be described later with reference to FIGs. 4-7, are realized.

FIG. 9 is a flowchart illustrating the processes of detaching a slave server from an information processing system. Here, it is assumed that one slave server is detached from an information processing system while the information processing system keeps operating. In the following description, a slave server to be detached from the information processing system may be referred to as a target slave server. The processes illustrated in FIG. 9 are realized by the CPUs 21 provided for the SPs 20 of the servers 1, each of which executes the firmware that is stored in the ROM 23.

When a target slave server is detached from the information processing system, the information that specifies the target slave server is given to the SP 20 of the master server 1M by, for example, a system administrator through the console 4. In that case, the CPU 21 of the SP 20 obtains the information that specifies the target slave server (SM21). Then, the CPU 21 instructs the SP 20 of the target slave server 1S to delete the system serial number 302 (SM22).

In the target slave server 1S, the CPU 21 of the SP 20 instructs the controller 31 of the FRU 30 to delete the system serial number 302 in the memory 32 according to the above instructions so as to perform deletion. Moreover, the CPU 21 notifies the SP 20 of the master server 1M of the completion of the deletion of the system serial number 302 (SS21). Next, in the target slave server 1S, the CPU 21 of the SP 20 terminates the operation of the system board 10 or the like, and then terminates the operation of the SP 20 itself (SS22).

In the master server 1M, after the CPU 21 of the SP 20 instructs the target slave server 1S to delete the system serial number 302, the CPU 21 awaits notification from the target slave server 1S in regard to the completion of the deletion of the system serial number 302. When the notification is received, the CPU 21 determines whether the system serial number 302 stored in the working area 201 matches the device serial number 303 of the target slave server 1S (SM23). When they do not match, SM24 to SN26 are skipped, and the operation of the master server 1M terminates.

The state in which the device serial number 303 of the target slave server 1S matches the system serial number 302 indicates that the server 1S having the device serial number 303 adopted as the current system serial number has been detached from the information processing system. Accordingly, in this case, the processes of determining a new system serial number are performed in SM24 to SM26.

In SM24, the CPU 21 deletes the system serial number 302 that is stored in the memory 32 of the FRU 30. Next, the CPU 21 instructs the SPs 20 of all the slave servers 1S remaining in the information processing system to restart. In addition, the master server 1M also restarts the SP 20 in master server (SM25). By so doing, the registration of a system serial number is performed for the servers 1 remaining in the information processing system (i.e., the master server 1M and the slave servers 1S) (SM26) The registration of a system serial number is equivalent to the processes illustrated in the flowchart of FIGs. 8A and 8B. After that, the CPUs 21 of the SPs 20 provided for the servers 1 start performing normal processes for management purposes.

FIGs. 4-7 illustrate some embodiments of the determination of a system serial number. Note that the determination of a system serial number illustrated in FIGs. 4-7 is realized by the processes illustrated in the flowchart of FIGs. 8A, 8B, and 9. Note that in FIGs. 4-7, device 0, device 1, device 2, and device 3 correspond to the server 1-0, the server 1-1, the server 1-2, and the server 1-3, respectively. The device 0 (i.e., the server 1-0) functions as the master server.

FIG. 4 illustrates a method for determining a system serial number when a server is added to an information processing system. Here, the information processing system includes the three servers 1-0 to 1-2. Then the server 1-3 is added to the information processing system.

In the information processing system that includes the three servers 1-0 to 1-2, device serial number "A" of the master server 1-0 is adopted as the system serial number by the master server 1-0. When the server 1-3 is added to the information processing system, the processes in the flowchart of FIGs. 8A and 8B are performed.

The master server 1-0 collects the device serial numbers of all the servers 1-0 to 1-3 in SM4. Accordingly, device serial numbers "A", "B", "C", and "D" are collected. Moreover, the master server 1-0 compares the previous system serial number "A" with the device serial numbers "A", "B", "C", and "D" in SM5 and SM6. As a result, the device serial number that matches the previous system serial number (i.e., "A") is specified in SM7, and the specified device serial number "A" is adopted as a new system serial number. In this case, the system serial number is not changed when a new server (1-3) is added to the information processing system.

When a master server is selected from the servers 1-0 to 1-3, the system serial number is unchanged even if a new server is added to an information processing system. However, when for example the device serial number of the server 1-3 is stored in the server 1-3 as the system serial number and the server 1-3 operates as a master server, the device serial number of the server 1-3 is adopted as the system serial number, and the system serial number may be changed.

FIG. 5 illustrates a method for determining a system serial number when an information processing system is divided into two information processing systems. In this example, the information processing system has been configured to include four servers 1-0 to 1-3. The information processing system is divided into a system including the servers 1-0 and 1-1 and a system including the servers 1-2 and 1-3. Each of the servers 1-0 and 1-2 functions as a master server in the divided information processing systems.

In FIG. 5, "DEVICE 0" indicates a master server. In addition, "A", "B", "C", and "D" indicate the device serial numbers of the servers 1-0, 1-1, 1-2, and 1-3, respectively.

Before the division of the information processing system, the master server 1-0 adopts the device serial number "A" of the master server 1-0 as the system serial number. When the information processing system is divided as illustrated in FIG. 5, the system serial number is determined in each information processing system. At this time, in the servers 1-2 and 1-3 detached from the system to which the master server 1-0 belongs, the system serial number is deleted in the memory 32 due to the processes illustrated in the flowchart of FIG. 9. After that, one of the servers 1-2 and 1-3 (for example, the server 1-2) is selected as a master server, and the system serial number is determined.

In the information processing system that includes the server 1-0, the system serial number "A" is stored in each of the servers 1-0 and 1-1. Accordingly, the device serial number "A" of the master server 1-0 is selected as the system serial number again, in a similar manner to the example of FIG. 4.

In the information processing system that includes the server 1-2, the system serial number is deleted from each of the servers 1-2 and 1-3. Accordingly, it is determined to be "NO" in SM6 of the flowchart of FIG. 8B. In this case, the system serial number of the information processing system is determined according to SM8 through SM10 of the flowchart of FIG. 8B. For example, when the number of times the device serial number of the server 1-2 has been adopted as the system serial number is greater than the number of times the device serial number of the server 1-3 has been adopted as the system serial number (that is, when the adoption count of the server 1-2 is larger than the adoption count of the server 1-3), the device serial number of the server 1-2 is adopted as a new system serial number in SM9. When the number of times the device serial number of the server 1-2 has been adopted as the system serial number is equal to the number of times the device serial number of the server 1-3 has been adopted as the system serial number, a smaller one of these two device serial numbers is adopted as a new system serial number in SM10.

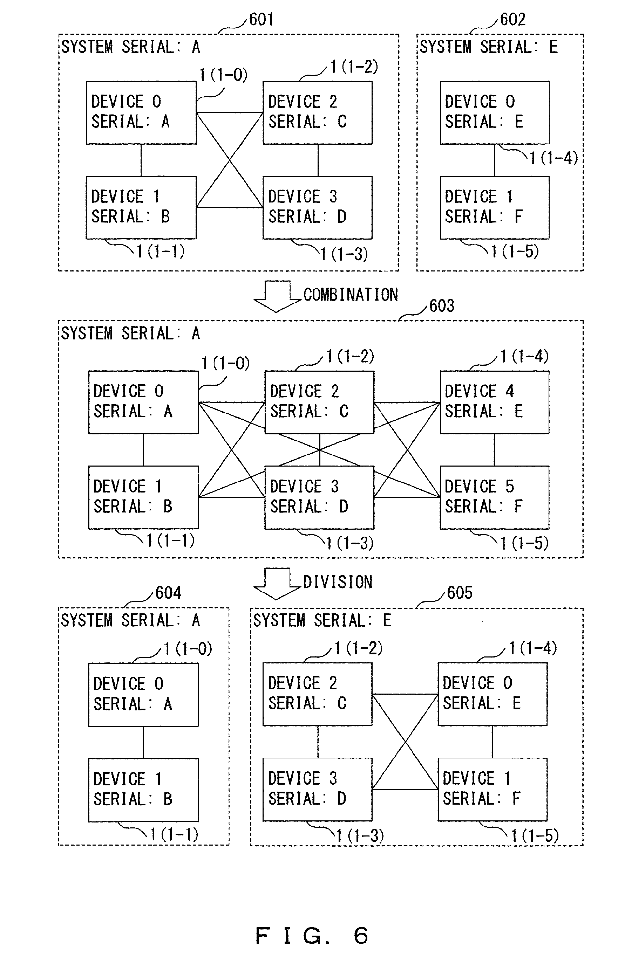

In the example of FIG. 6, an information processing system 601 including the servers 1-0 to 1-3 is combined with an information processing system 602 including the servers 1-4 to 1-5 to form an information processing system 603. After that, the information processing system 603 is divided into an information processing system 604 including the servers 1-0 to 1-1 and an information processing system 605 including the servers 1-2 to 1-5.

The device serial number "A" of the server 1-0 is adopted as the system serial number in the information processing system 601, and device serial number "E" of the server 1-4 is adopted as the system serial number in the information processing system 602.

In the information processing system 603, it is assumed that the server 1-0 is selected as the master server. In this case, the master server 1-0 collects the device serial numbers of all the servers 1-0 to 1-5 in SM4 of FIG. 8A. By so doing, device serial numbers "A", "B", "C", "D", "E", and "F" are collected. Then the master server 1-0 compares the previous system serial number with device serial numbers "A", "B", "C", "D", "E", and "F" in SM5 and SM6. In this example, "A" was adopted as the system serial number in the information processing system 601. Thus, the device serial number that matches the previous system serial number (i.e., "A") is specified in SM7, and the specified device serial number "A" is adopted as the system serial number of the information processing system 603.

In the information processing system 604, it is assumed that the server 1-0 is selected as the master server. Here, the system serial number "A" is stored in the memories 32 of the servers 1-0 and 1-1 of the information processing system 604. Accordingly, SM5 and SM7 are performed in the master server 1-0, and the device serial number "A" of the master server 1-0 is adopted as the system serial number of the information processing system 604.

In the information processing system 605, it is assumed that the server 1-4 is selected as the master server. Here, in the servers 1-2 to 1-5 detached from the system to which the master server 1-0 belongs, the system serial number is deleted in the memory 32 due to the processes illustrated in the flowchart of FIG. 9. Hence, the system serial number of the information processing system 605 is determined according to SM8 through SM10 of the flowchart of FIG. 8B. In other words, the system serial number of the information processing system 605 is determined, for example, according to the adoption count of the servers 1-2 to 1-5. In this example, the device serial number "E" of the server 1-4 has been adopted as the system serial number in the information processing system 602. In other words, the adoption count of the server 1-4 is the largest among the servers 1-2 to 1-5. Accordingly, the device serial number "E" of the server 1-4 is adopted also as the system serial number of the information processing system 605 according to SM8 and SM9.

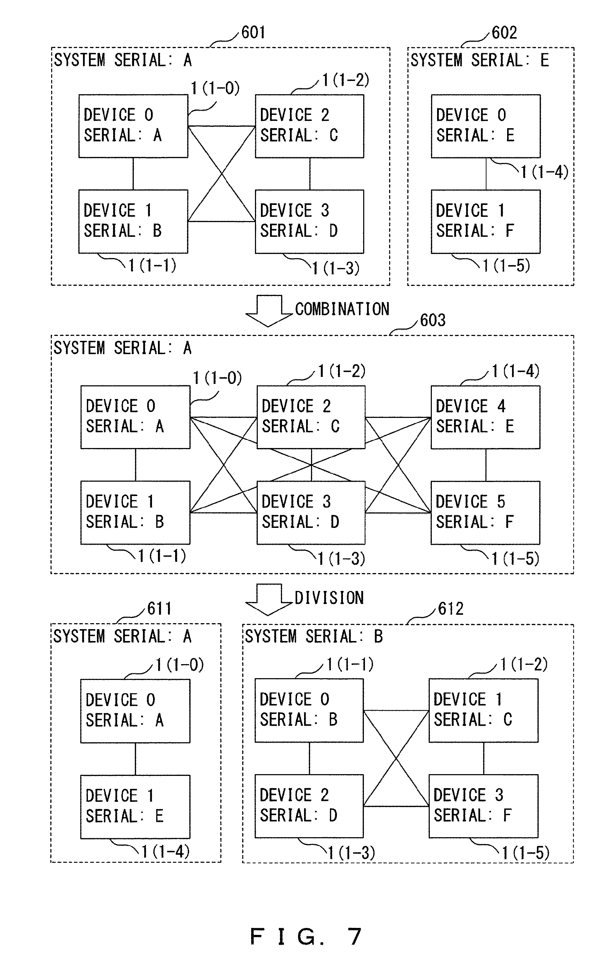

In the example of FIG. 7, in a similar manner to the example of FIG. 6, the information processing systems 601 and 602 are combined to form the information processing system 603. However, in the example of FIG. 7, the information processing system 603 is divided into an information processing system 611 including the servers 1-0 and 1-4 and an information processing system 612 including the servers 1-1, 1-2, 1-3, and 1-5.

In the information processing system 611, it is assumed that the server 1-0 is selected as the master server. In this case, in a similar manner to the information processing system 604 of FIG. 6, the device serial number "A" of the master server 1-0 is adopted as the system serial number of the information processing system 611.

In the information processing system 612, the server 1-4 with the device serial number "E", which was adopted as the system serial number in the information processing system 602, does not exist. Here, it is assumed that none of the device serial numbers of the servers 1-1, 1-2, 1-3, and 1-5 included in the information processing system 612 has been adopted as the system serial number. If this is the case, "NO" is obtained in SM8 when the processes in the flowchart of FIGs. 8A and 8B are performed, and then SM10 is performed. In this case, the smallest one of the device serial numbers of the servers 1-1, 1-2, 1-3, and 1-5 is adopted as the system serial number. In FIG. 7, device serial number "B" of the server 1-1 is the smallest, and thus is adopted as the system serial number of the information processing system 612.

In the embodiments described above, one of the servers 1 included in an information processing system functions as an identification information decision device that determines the system serial number. However, such an identification information decision device may be provided for an information processing unit other than the servers 1. In that case, the identification information decision device may determine the system serial numbers of two or more information processing systems.

It is preferable that an identification information decision device collect the device serial number 303 from each of the servers 1 as necessary. It may be configured such that an adoption count will be updated by an identification information decision device for each of the collected device serial numbers. Various other modifications may be made in addition to the modifications described above.

## Claims

1. An information processing system including a plurality of information processing units (1), the information processing system comprising:
an information collector (20) configured to collect device identification information assigned to each of the information processing units;
a storage (32) configured to store history information indicating whether each piece of the device identification information collected by the information collector has been used as system identification information of the information processing system; and
a decision unit (20) configured to determine the system identification information from the device identification information collected by the information collector, according to the history information stored in the storage and the device identification information collected by the information collector.

2. The information processing system according to claim 1, wherein
the history information includes previous decision information indicating a system identification information which has been determined in an immediately previous decision by the decision unit, and
when there is device identification information that matches system identification information represented by the previous decision information within the device identification information collected by the information collector, the decision unit determines the matched device identification information to be new system identification information.

3. The information processing system according to claim 2, wherein
each of the information processing unit stores adoption information that indicates whether device identification information assigned to the information processing unit has been adopted as the system identification information in the past,
the information collector collects the device identification information and the adoption information from each of the information processing units, and
when there is no device identification information that matches the system identification information represented by the previous decision information within the device identification information collected by the information collector, the decision unit selects, as new system identification information, device identification information that has been adopted as the system identification information in the past based on the collected adoption information.

4. The information processing system according to claim 3, wherein
the adoption information indicates the number of times the corresponding device identification information has been adopted as the system identification information in the past, and
when there is no device identification information that matches the system identification information represented by the previous decision information within the device identification information collected by the information collector, the decision unit selects, as the new system identification information, the device identification information whose number of counts indicated by the adoption information is greatest.

5. The information processing system according to claim 4, wherein
when the adoption information collected by the information collector indicates that no device identification information was adopted as the system identification information, the decision unit selects one piece of the device identification information collected by the information collector as the system identification information according to a specified rule.

6. An identification information decision device comprising:
an information collector (20) configured to collect first identifiers respectively assigned to information processing units included in an information processing system;
a storage (32) configured to store history information indicating whether each of the first identifiers has been used as a second identifier that identifies the information processing system; and
a decision unit (20) configured to determine the second identifier from the first identifiers collected by the information collector, according to the history information stored in the storage and the first identifiers collected by the information collector.

7. A method for determining, by using a computer, identification information of an information processing system including a plurality of information processing units, the method comprising:
collecting device identification information assigned to each of the information processing units;
obtaining history information indicating whether the device identification information has been adopted as system identification information that identifies the information processing system; and
determining the system identification information from the collected device identification information, according to the history information and the collected device identification information.

8. A computer-readable recording medium having stored therein a program for causing a computer to execute an identification information decision process comprising:
collecting device identification information assigned to each of the information processing units;
obtaining history information indicating whether the device identification information has been adopted as system identification information that identifies the information processing system; and
determining the system identification information from the collected device identification information, according to the history information and the collected device identification information.
